Europäisches Patentamt

European Patent Office

Office européen des brevets

(19)

(11) **EP 1 521 389 A2**

(12) **EUROPÄISCHE PATENTANMELDUNG**

(43) Veröffentlichungstag:
06.04.2005 Patentblatt 2005/14

(51) Int Cl.⁷: **H04L 5/02**

(21) Anmeldenummer: 04104205.2

(22) Anmeldetag: 02.09.2004

(84) Benannte Vertragsstaaten:
**AT BE BG CH CY CZ DE DK EE ES FI FR GB GR
HU IE IT LI LU MC NL PL PT RO SE SI SK TR**
Benannte Erstreckungsstaaten:
**AL HR LT LV MK**

(30) Priorität: **30.09.2003 DE 10345434**

(71) Anmelder: **SIEMENS AKTIENGESELLSCHAFT**
**80333 München (DE)**

(72) Erfinder:
• **Costa, Elena**
**85748 Garching (DE)**
• **Filippi, Alessio**
**81739 München (DE)**
• **Schulz, Egon**
**80993 München (DE)**
• **Weckerle, Martin**
**89134 Blaustein (DE)**

(54) **Verfahren und Vorrichtungen zum Abbilden von Daten auf Subträger eines Mehrträgersystems bzw. zum Rückabbilden**

(57)     Die Erfindung bezieht sich auf Verfahren und Vorrichtungen zum Abbilden von Daten (d1, d2, d3, d4) einer Datenquelle (DS) einer Station (MS2) auf eine der Station zugeordnete Anzahl (M) von Subträgern (f1, f3, f5, f7) einer Vielzahl (N) von Subträgern (f0, f1, ... f7) eines Mehrträger-Systems (MC), insbesondere eines OFDM-MC-Systems, bei dem eine Folge der Daten (d1, ... d4) der Station (MS2) zum Separieren von weiteren Daten auf zueinander gleichmäßig beabstandete der Subträger (f1, f3, f5, f7) moduliert wird. Kennzeichnend werden beim Modulieren der Daten (d1, ... d4) nur die zugeordneten Subträger (f1, f3, f5, f7) moduliert.

FIG 1

EP 1 521 389 A2

**Beschreibung**

Die Erfindung bezieht sich auf Verfahren zum Abbilden von Daten auf Subträger eines Mehrträgersystems bzw. zum Rückabbilden der Daten sowie auf entsprechende Vorrichtungen mit den oberbegrifflichen Merkmalen der unabhängigen Patentansprüche.

Das Prinzip eines Mehrträgersystems (MC/Multi Carrier System) besteht darin, eine verfügbare Bandbreite eines Trägers in eine Vielzahl von Subträgern bzw. Sub-Kanälen (Sub Channels) zu unterteilen, auf welche viele parallele Datenströme mit Daten bzw. Datensymbolen fest zugeordnet moduliert werden. Ein Hauptvorteil eines Mehrträgersystems besteht in dessen Fähigkeit, das komplexe Problem der Breitbandentzerrung (Broad Band Equalization) zu bewältigen. Dies ist beispielsweise aus J.A.C. Bingham, "Multicarrier Modulation for Data Transmission: An Idea Whose Time Has Come", IEEE Commun. Mag., Seiten 5 - 14, Mai 1990, bekannt [1].

Das im Bereich der Kommunikationstechnik für Mobilfunk bekannteste Mehrträgersystem ist das so genannte Orthogonal Frequency Division Multiplexing (OFDM: Orthogonales Frequenzaufteilungs-Multiplexing). OFDM wird momentan in europäischen Standards für digitalen Audio- und Video-Rundfunk und in Funk-Datennetz-Standards verwendet. Dokumentiert sind DABund DVB-Standards sowie ein Standard für funkgestützte Datennetze (Wireless LAN-Standard) in European Telecommunications Standard Institute, "Digital audio broadcasting (DAB); DAB to mobile portable and fixed receiver", France, ETS 300 401, February 1995 [2], European Telecommunications Standard Institute, "Digital Video Broadcasting (DVB); Framing structure, channel coding and modulation for 11/12 GHz satellite services", France, ETS EN 300 421, 1997-08 [3] bzw. European Telecommunications Standard Institute, "Broadband radio access networks (BRANs); HIPERLAN Type 2; Physical (PHY) layer", France, ETSI TS 101 475 V1.1.1, Apr. 2000 [4].

Derzeit wird OFDM auch als vielversprechender Kandidat für zukünftige funkgestützte zellulare Kommunikationssysteme angesehen. In letzter Zeit werden auch andere, als gefilterte Mehrton-Systeme (FMT: Filtered Multi Tone) bekannte Systeme für drahtgebundene wie auch für funkgestützte Kommunikationssysteme in Betracht gezogen. Dokumentationen finden sich in G. Cherubini, E. Eleftheriou and S. Ölcer, "Filtered Multi Tone Modulation for Very High-Speed Digital Subscriber Lines", IEEE Journal on Select. Area in Communications, vol. 20, n. 5, June 2002 [7] bzw. N. Benvenuto, S. Tomasin, L. Tomba, "Equalization Method in OFDM and FMT Systems for Broadband Wireless Communications", IEEE Trans. on Commun., vol. 50, Seiten 1413 - 1418, Sep. 2002 [9]. Insbesondere das FMT-System für leitungs- bzw. kabelgebundene Übertragungen bildet eine mögliche physikalische Schnittstelle für die VDSL-Technologie (VDSL: Very-high-bit-rate Digital Subscriber Line) gemäß "Very-high-bit-rate Digital Subscriber Line (VDSL) Metallic Interface. Part 3", Committee T1, Working Group T1E1.4 Contribution T1E1.4/2000-013R2, Feb. 2001 [11].

Bei dem Einsetzen eines OFDM-basierten Mehrteilnehmer-Szenarios (Multi User (MU) scenario) für Übertragungen in Abwärtsrichtung (Downlink) von einer netzseitigen Basisstation zu einer teilnehmerseitigen User-Station und für Übertragungen in Aufwährtsrichtung (Uplink) von einer teilnehmerseitigen bzw. User-Station zu einer netzseitigen Station werden verschiedene Mehrfach-Zugriffs-Techniken (Multiple Access (MA)-Technics) verwendet. Beispielsweise sind diesbezüglich ein Mehrfachzugriff mit zeitlicher Aufteilung (TDMA: Time Division Multiple Access), mit Frequenzbereichsaufteilung (FDMA: Frequency DMA) und für Codeaufteilung (CDMA: Code DMA) bekannt. Veröffentlichungen finden sich in A. Tonello, N. Laurenti and S. Pupolin, "Capacity Considerations on the Uplink of a Multiuser DMT OFDMA System Impaired by Time Misalignments and Frequency Offsets", in "Software Defined Radio", Springer-Verlag, Del Re ed. 2000 [5], A. Tonello and S. Pupolin, "Discrete Multi-Tone and Filtered Multi-Tone Architectures for Broadband Asynchronous Multi-User Communications", in Proceed. Of WPMC 01, Aalborg, Seiten 461 - 466, Sept. 2001 [6] sowie N. Yee, J. P. Linnartz, G. Fettweis, "Multi-Carrier CDMA in Indoor Wireless Radio Networks", 1993 [10].

Im Fall des FDMA werden üblicherweise zwei mögliche Subträger-Anordnungen berücksichtigt. Die für die Mehrfachs-Zugriff-Strategien erforderlichen Verfahrensschritte werden stets vor der Multiträger-Modulation durchgeführt, d.h. in dem digitalen Bereich der Datenverarbeitseinrichtungen durchgeführt. Dies bedeutet, dass ein Teilnehmer bzw. User, dem nur ein vorgegebener Satz von Subträgern zugewiesen wurde, einen MC-Symbol-Vektor aufbauen muss, dessen Elemente für die anderen Subträger, welche anderen Teilnehmern zugeordnet sind, entsprechend Nullen enthalten müssen. Mit anderen Worten, der einzelne Teilnehmer moduliert bei dem Mehrträger-System auch die Null-Werte. Dieser Nachteil wurde in Kauf genommen, da der große Durchbruch von OFDM als einem ausgewählten Mehrträger-System mit der Einführung von seiner schnellen Implementierung auf Basis einer IFFT-Operation (IFFT: Inversen Fast Fourier-Transformation) begann. Dieses schnelle Implementierungsverfahren moduliert bei dem Mehrträger-System alle der Subträger, weshalb die Zuordnung von verschiedenen Subträgern zu verschiedenen Teilnehmern vor der MC-Modulation vorgenommen werden muss. Folglich ist für die Teilnehmer-Terminals in einem Multi-Teilnehmer-Szenario stets eine fest vorgegebene Komplexität gegeben, und zwar unabhängig von der Anzahl von Subträgern, die dem einzelnen Teilnehmer momentan tatsächlich zugeordnet sind.

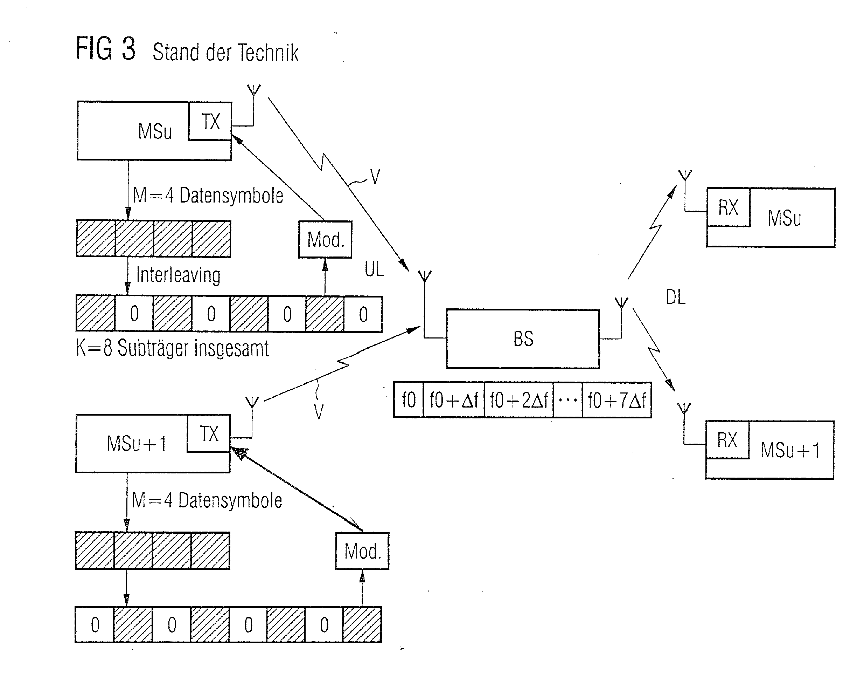

FIG 3 stellt ein einfaches Ausführungsbeispiel eines MC-MU-Szenarios (MU: Multi User/Mehrteilnehmer) mit verschachtelter (Interleaving) FDMA-Technik dar. Die linke Seite von FIG 3 stellt den Fall eines Uplink-Szenarios dar, bei dem sich zwei Teilnehmer bzw. User über deren Stationen MSu bzw. MSu+1 für die Übertragung über die Funkschnittstelle V eine Gesamtzahl N von 8 Frequenzsubträgern fo+Δf, fo+2Δf, .... , fo+8Δf des verfügbaren Frequenzbandes teilen. Die Gesamtanzahl U der Teilnehmer beträgt 2, womit die Anzahl M der Subträger fi pro Teilnehmer 4 beträgt und jeweils einen Frequenzabstand von Δf aufweist. Dem ersten Teilnehmer bzw. seiner Station MSu werden gemäß dem Verschachtelungsprinzip bzw. Interleaving zur Übertragung von vier aufeinander folgenden Daten von einem Symbolblock der erste, dritte, fünfte und siebte Subträger zugeordnet. Für die weiteren Subträger werden Null-Werte bereitgestellt. Der derart erzeugte Datenblock wird einer Modulationseinrichtung Mod zugeführt, welche den Block moduliert und einer Sendeeinrichtung TX zuführt. Die derart vorbereiteten Daten werden über die Funkschnittstelle V in Aufwärtsrichtung UL zur Basisstation BS übertragen. In gleicher Art und Weise werden in der zweiten Teilnehmerstation MSu+1 vier Datensymbole bereitgestellt, wobei diese in einem Symbolblock der zweiten, vierten, sechsten und achten Position zugeordnet werden. Die weiteren Positionen, welche der ersten teilnehmerseitigen Station MSu zugeordnet wurden, werden mit Null-Werten aufgefüllt. Daraufhin wird der Symbolblock einer Modulationseinrichtung Mod zugeführt, welche eine Modulation auf das Frequenzband bzw. die einzelnen Subträger vornimmt. Die erhaltenen Daten werden über eine Sendeeinrichtung TX und die Funkschnittstelle V zur Basisstation BS übertragen.

Beim dargestellten Ausführungsbeispiel findet eine Kommunikation zwischen der ersten und der zweiten Mobilstation als teilnehmerseitigen Stationen statt, so dass die Daten der zweiten Station MSu+1 in Abwärtsrichtung DL zur ersten teilnehmerseitigen Mobilstation MSu übertragen werden und die Daten von der ersten teilnehmerseitigen Mobilstation MSu in Abwärtsrichtung DL zur zweiten teilnehmerseitigen Mobilstation MSu+1 übertragen werden. Zum Empfang weisen die Stationen entsprechende Empfangseinrichtungen RX auf.

Ein solches verschachteltes Frequenzabbilden ist insbesondere dadurch vorteilhaft, dass es die Frequenzdiversität, die im Funkkanal inhärent verfügbar ist, effizient verwendet. Jeder Teilnehmer bzw. die entsprechenden Stationen übertragen ihre Daten auf einem gegebenen Satz maximal beabstandeter Subträger innerhalb der verfügbaren Bandbreite. Wird N als Gesamtanzahl von verfügbaren Subträgern und U als Gesamtanzahl der Teilnehmer bzw. von deren Stationen betrachtet, wobei weiterhin angenommen wird, dass von jeder Station die gleiche Anzahl von Subträgern zum Senden verwendet wird, dann kann jeder Teilnehmer bzw. jede Station M = K/U Subträger belegen. Das für sich bekannte Verfahren zum Implementieren einer verschachtelten Subträger-Zuordnung [5] besteht darin, das MC-Symbol aus N Subträgern aufzubauen und Null-Werte den Subträgern zuzuweisen, welche durch andere Teilnehmer bzw. Stationen belegt werden. Im verschachtelten OFDM-FDMA-Fall bildet jeder Teilnehmer einen Block der Länge N mit M Symbolen, welche durch U-I Null-Werte getrennt werden, d.h. N-M Null-Werte werden zu jedem Block aus N-Symbolen hinzugefügt. Der Block wird dann auf N-Subträger MC-moduliert, im OFDM-Fall durch eine IFFT-Operation, was eine Verschwendung von Rechenleistung ist, da viele der Samples (Abtastwerte) Null-Werte sind, aber trotzdem eine entsprechend große Rechenkomplexität bereitgestellt werden muss.

Wie aus FIG 3 ersichtlich ist, wird der in einer Station entstehende Block mit vier Datensymbolen und vier Null-Werten aufgefüllt und anschließend über die Gesamtanzahl von 8 Werten auf 8 Subträger moduliert. Dass Null-Werte mitmoduliert werden, wird dabei in Kauf genommen.

Das gleiche Problem besteht auch im entsprechenden Szenario für die Abwärtsverbindungen DL, wo der einzelne Teilnehmer bzw. dessen Station üblicherweise alle N-Subträger MC-demoduliert und dann nachfolgend nur die Symbole erfasst, die über einen vorgegebenen Satz von M-Subträgern empfangen wurden. Auch in diesem Fall wird eine große Komplexität der Rechenheinrichtung beim Empfänger benötigt, wobei wiederum nicht berücksichtigt wird, dass eine Vielzahl von Null-Werten oder Daten fremder Stationen empfangen wurde.

Die Komplexität eines Rechnungsvorgangs ist ein Schlüsselaspekt während des Entwurfsprozesses eines Kommunikationssystems, insbesondere dann, wenn die Teilnehmer-Station bzw. das Teilnehmer-Terminal betrachtet wird. Eine hohe Komplexität verursacht direkt entsprechend hohe Kosten, eine entsprechende Größe und einen entsprechenden Leistungsverbrauch, d.h. verkürzt die Batterie-Lebensdauer, der Teilnehmer-Ausstattung.

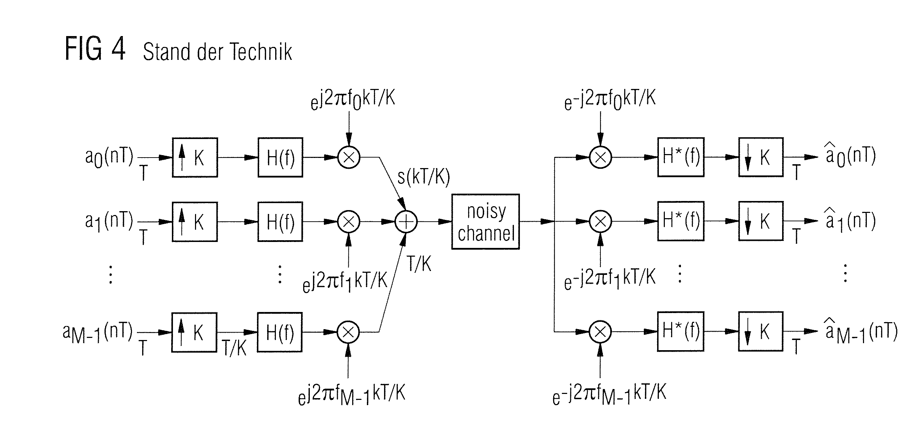

Allgemein bekannt und in z.B. N. Benvenuto, G. Cherubini, Algorithms for Communications Systems and their Applications, John Wiley + Sons, Oktober 2002 [8] oder in G. Cherubini [7] beschrieben ist ein Filterbank-Mehrträger-Schemata (FB-MC), wie dies in FIG 4 dargestellt ist. Betrachtet werden eine Anzahl von M Eingangssignalen $a_m(nT)$, m = 0,..., M-1, n = ..., -1, 0, +1, ..., wobei die Signale über jeweils eine eigene Leitung eingegeben werden. T stellt dabei die Symbol-Periode der Daten und M die Anzahl der parallelen Datenströme dar. Die Leitungen führen jeweils zu einer Überabtasteinrichtung zum Durchführen eines Oversampling (Überabtasten) mit dem Wert K, d.h. jeder eingegebene Wert wird K-mal ausgegeben. Die derart replizierten Werte werden jeweils einem so genannten Prototypfilter H(f) zugeführt. Die Daten bzw. Datensymbole $a_m(n/T)$ sind komplexe Werte, die über ein vorheriges Bitmapping erhalten werden. Diese Werte werden durch die Anordnung jeweils einer Überabtastung (Upsampling) um den Faktor K ≥ M und einer Filterung mit dem gleichen Prototypfilter unterzogen, woraufhin jedes Spektrum um eine Subträger-frequenz $f_m$ angeordnet wird, indem eine Multiplikation mit dem exponentiellen Faktor $e^{j2\pi\Delta fo \cdot nT/K}$. Durch Summation der mit dem Faktor multiplizierten Daten entsteht ein zu übertragendes Signal

$$s(k\frac{T}{K}) = \sum_{m=0}^{M-1}\sum_{n=-\infty}^{+\infty} a_m(nT)h\left[(k-nK)\frac{T}{K}\right]e^{2\pi j f m k}\frac{T}{K}. \tag{1}$$

Ferner wird unterstellt, dass die Subträger-Frequenzen gleichförmig zueinander beabstandet sind, d.h.

$$f_m = mK/M1/T \tag{2}$$

gilt. Unter dieser Hypothese kann für sowohl Sender als auch Empfänger eine schnelle Implementierung auf Basis der schnellen Fourier-Transformation kombiniert mit einer Polyphasen-Dekomposition des Prototypfilters erzielt werden. Die Filterbank wird für den Fall als kritisch abgetastet bezeichnet, wenn K = M gilt, d.h. die Anzahl der Subträger gleich dem Überabtastfaktor ist. Unter dieser Bedingung und der Annahme, dass der Prototypfilter ein Rechteckfilter ist, gilt h(k·T/K) = 1, falls 0 kleiner gleich k < K-1 gilt bzw. h(k·T/K) = 0 sonst (3). Das für sich bekannte OFDM-Modulationsschema wird als ein Spezialfall erzielt. Das System wird als nicht kritisch abgetastet bezeichnet, wenn der Überabtastfaktor größer als die Anzahl der Subträger ist, d.h. K > M gilt. In diesem Fall sind jedem Block aus M Eingangsabtastwerten bzw. Eingangsdaten K Ausgangsabtastwerte bzw. Ausgangsdaten zugeordnet, so dass ein gewisses Maß von Redundanz eingeführt wird. Diese Redundanz wird verwendet, um die Subträger-Beabstandung, welche durch K/MT gegeben ist, zu erhöhen.

Für OFDM als ein Spezialfall kann eine schnelle Implementierung für den nicht kritisch abgetasteten Fall ermöglicht werden. Durch Substitution von (2) in (1) gilt für das zu übertragende Signal

$$s(k\frac{T}{K}) = \sum_{m=0}^{M-1}\sum_{n=-\infty}^{+\infty} a_m(nT)h\left[(k-nK)\frac{T}{K}\right]e^{j2\pi\frac{mK}{TM}(k\frac{T}{K})}. \tag{4}$$

Durch Invertieren der Summenreihenfolge gilt

$$s(k\frac{T}{K}) = \sum_{n=0}^{+\infty}\sum_{m=0}^{M-1} a_m(nT)e^{j2\pi\frac{mK}{TM}(k\frac{T}{K})}h\left[(k-nK)\frac{T}{K}\right]. \tag{5}$$

Durch eine Änderung der Variable

$$k\frac{T}{K} = (lM + i)\frac{T}{K}, \tag{6}$$

mit i = 0, ..., M-1 und 1 = 0, ..., +∞ folgt

$$s(lM\frac{T}{K}+i\frac{T}{K}) = \sum_{n=0}^{+\infty}\sum_{m=0}^{M-1} a_m(nT)e^{j2\pi\frac{mK}{TM}(lM\frac{T}{K}+i\frac{T}{K})} h\left((lM+i-nK)\frac{T}{K}\right)$$

$$(7)$$

Dabei ist $A_i(nT)$ gleich

$$\sum_{m=0}^{M-1} A_m(nT)e^{j2\pi\frac{mi}{M}}$$

die inverse diskrete Fourier-Transformation, was eine Umformung ermöglicht zu

$$s(lM\frac{T}{K}+i\frac{T}{K}) = \sum_{n=0}^{+\infty} A_i(nT)h(lM\frac{T}{K}+i\frac{T}{K}-nT) .$$

$$(8)$$

Gemäß Gleichung (8) wird das Ausgangssignal s(t(T/K)) zum Zeitpunkt k durch eine Konvolution des (k mod M)-ten IDFT-Ausgangswertes mit der (k mod K)-ten Polyphasen-Filterkomponente für K erzielt. Jeder Ausgangswert der IDFT wird in eine Verzögerungsleitung, d.h. einem Speicherregister der Polyphasen-Komponenten des Filters der Länge L/K eingegeben, woraufhin die Filterkoeffizienten periodisch geändert werden. Falls nur ein OFDM-Symbol, d. h. 1 = 0, betrachtet wird, für die Gesamtanzahl der Subträger M = K gilt und der Prototypfilter h(·) gemäß (3) definiert ist, wird Gleichung (8) zu

$$s(i\frac{T}{M}) = \sum_{n=0}^{+\infty} A_i(nT)h(i\frac{T}{M}-nT) .$$

$$(9)$$

Durch den Ansatz des Filters h(·) als Kronecker-Delta-Funktion für jedes i vereinfacht sich dies zu

$$s(i\frac{T}{M}) = A_i(nT),$$

$$(10)$$

was der inversen diskreten Fourier-Transformation (IDFT) der Eingangssequenz entspricht.
Die Aufgabe der Erfindung besteht darin, ein Verfahren und eine Vorrichtung zum Abbilden von Datensymbolen einer Datenquelle bzw. eines Teilnehmers auf eine der Datenquelle bzw. dem Teilnehmer zugeordnete Anzahl von zueinander separierten Subträgern einer Vielzahl von Subträgern eines Mehrträger-Systems mit Blick auf den Berechnungsaufwand und die entsprechende Komplexität zu verbessern. Entsprechend sollen auch Verfahren bzw. Vorrichtungen für eine Rückabbildung bereitgestellt werden.
Diese Aufgabe wird durch Verfahren zum Abbilden bzw. Rückabbilden von Datensymbolen auf eine zugeordnete Anzahl von zueinander separierten Subträgern einer Vielzahl von Subträgern eines Mehrträger-Systems mit den Merkmalen der unabhängigen Patentansprüche 1 und 10 gelöst. Entsprechende Vorrichtungen weisen die Merkmale der nebengeordneten Patentansprüche 7 und 16 auf.
Eine erste, senderseitige Lösung besteht aus einem Verfahren zum Abbilden von Daten einer Datenquelle einer Station auf eine der Station zugeordnete Anzahl von Subträgern einer Vielzahl von Subträgern eines Mehrträger-Systems, bei dem eine Folge der Daten der Station zum Separieren von anderen Daten auf zueinander gleichmäßig beabstandete der Subträger moduliert wird, wobei beim Modulieren der Daten nur die zugeordneten Subträger moduliert werden.

Eine vorzugsweise ein solches Verfahren umsetzende Vorrichtung ist zum Abbilden von Daten einer Datenquelle auf eine der Datenquelle zugeordnete Anzahl von zueinander separierten Subträgern einer Vielzahl, insbesondere Gesamtanzahl von Subträgern eines Mehrträger-Systems mit einer Datenquelle zum Bereitstellen einer Folge von Daten, einer Modulationseinrichtung zum Modulieren der Daten auf die Subträger und einer Ausgabeeinrichtung zum Ausgeben der verarbeiteten Daten ausgebildet, wobei die Modulationseinrichtung zum Modulieren nur der zugeordneten Subträger angeordnet und ausgebildet ist.

Eine zweite, empfängerseitige Lösung besteht aus einem Verfahren zum Rückabbilden von Daten in einer die Daten empfangenden Station, bei dem die Daten über eine Anzahl den Daten zugeordneter Subträger eines Trägers mit einer Vielzahl, insbesondere Gesamtanzahl von Subträgern eines Mehrträger-Systems empfangen werden und wobei die zugeordneten Subträger zum Separieren der Daten der Station voneinander gleichmäßig beabstandet sind, wobei beim Rückabbilden nur empfangene Daten der zugeordneten Subträger verarbeitet werden.

Eine vorzugsweise ein solches Verfahren umsetzende Vorrichtung ist zum Rückabbilden von Daten ausgebildet, wobei die Daten über eine Anzahl zu der Vorrichtung und/oder zu den Daten zugeordneter Subträger eines Trägers mit einer Vielzahl, insbesondere Gesamtanzahl von Subträgern eines Mehrträger-Systems empfangen werden und wobei die zugeordneten Subträger zum Separieren der Daten voneinander gleichmäßig beabstandet sind, und weist eine Demodulationseinrichtung zum Demodulieren der über die Subträger empfangenen Daten auf, wobei die Demodulationseinrichtung zum Demodulieren von über nur die zugeordneten Subträger empfangenen Daten zu den rückabgebildeten Daten ausgebildet ist.

Vorteilhafterweise werden verfahrensgemäß beim Modulieren der Datensymbole nur die zugeordneten Subträger moduliert bzw. beim Rückabbilden nur Daten der zugeordneten Subträger verarbeitet. Vorrichtungsgemäß wird die Modulationseinrichtung derart ausgestaltet, dass diese entsprechend nur die Subträger moduliert, welche den Daten der Datenquelle bzw. des Teilnehmers zugeordnet sind. Entsprechend wird auch bei der Rückabbildung nur eine reduzierte Demodulation vorgenommen. Zum Separieren ist zumindest ein Subträger für andere Daten zwischen je zwei benachbarten zugeordneten Subträgern zwischengesetzt. Die Vorrichtungen sind insbesondere zum Durchführen solcher Verfahren ausgestaltet.

Vorteilhafte Ausgestaltungen sind Gegenstand abhängiger Ansprüche.

Zum Verschieben der zugeordneten Subträger wird eine Multiplikation mit einem exponentiellen Faktor durchgeführt, insbesondere eine Multiplikation mit dem Faktor $e^{j2\pi\Delta f u n T/K}$ mit $\Delta f$ als Abstand der Subträger, u als zugeordnetem Index aus einer Gruppe auf die Gesamtanzahl der Subträger aufgeteilter Teilnehmer und $nT/K$ als Zeitindex.

Die Modulation wird bevorzugt durch eine Fourier-Transformation, insbesondere eine inverse schnelle Fourier-Transformation, auf nur die zugeordneten Subträger durchgeführt. Nach der Modulation wird eine Repetition der modulierten Daten durchgeführt. Zum Separieren wird der Abstand der zugeordneten Subträger dabei vorzugsweise anhand einer nicht-kritischen Überabtastung festgelegt. Als das Mehrträger-System (MC) wird bevorzugt ein OFDM-MC-System verwendet.

Auf eine aufeinanderfolgende Anzahl von Daten, die der Anzahl von zugeordneten Subträgern entspricht, wird vorzugsweise aufeinanderfolgend eine Modulation in Form einer inversen schnellen Fourier-Transformation auf die zugeführten Daten durchgeführt, eine Repetition der jeweiligen modulierten Daten entsprechend der Anzahl von Stationen durchgeführt, eine Parallel-/Seriell-Umsetzung auf eine Ausgangsleitung durchgeführt und eine Multiplikation der erhaltenen Daten mit einem exponentiellen Faktor unter Berücksichtigung des Abstands der Subträger, einer Gruppennummer der Station aus der Anzahl der Stationen und einem Laufindex durchgeführt.

Eine Vorrichtung zum Modulieren von Daten weist vorzugsweise eine Repetitionseinrichtung zum Vervielfachen der durch die Modulationseinrichtung jeweils ausgegebenen Daten auf, wobei die Repetitionseinrichtung der Modulationseinrichtung nachgeschaltet ist.

Eine Multiplikationseinrichtung dient zum Multiplizieren der verarbeiteten Daten vor dem Ausgeben mit einem exponentiellen Faktor zum Verschieben zu anderen Frequenzen, insbesondere mit dem Faktor $e^{j2\pi\Delta f u n T/K}$ mit $\Delta f$ als Abstand der Subträger, u als zugeordnetem Index aus einer Gruppe auf die Vielzahl der Subträger aufgeteilter Teilnehmer und $nT/K$ als Zeitindex.

Empfängerseitig wird gemäß einem bevorzugten Verfahren auf die empfangenen Daten eine Multiplikation mit einem die zugeordneten Subträger verschiebenden Faktor angewendet wird, insbesondere mit dem Faktor $e^{-j2\pi\Delta f u n T/K}$ mit $\Delta f$ als Abstand der Subträger, u als zugeordnetem Index aus einer Gruppe auf die Vielzahl der Subträger aufgeteilter Teilnehmer und $nT/K$ als Zeitindex. Auf die multiplizierten Daten wird eine Seriell-/Parallel-Umsetzung auf die Anzahl der zugeordneten Subträger angewendet. Auf die Daten wird nachfolgend eine weitere Seriell-/Parallel-Umsetzung auf jeweils die Anzahl der Stationen, welchen Subträger zugeordnet wurden, angewendet, woraufhin die aus der zweiten Seriell-/Parallel-Umsetzung erhaltenen Daten jeweils aufsummiert werden.

Eine Demodulation, insbesondere Fourier-Transformation (FFT), wird auf die verbleibenden Daten zum Bereitstellen rückabgebildeter Daten angewendet.

EP 1 521 389 A2

Bevorzugt wird aufeinanderfolgend auf die empfangenen Daten eine Anzahl, welche einer Anzahl von Repetitionen mit zugeordneten Subträgern entspricht, komplexer Multiplikationen durchgeführt wird, insbesondere mit einem Faktor $e^{-j2\pi ukT/K}$ , eine Seriell-/Parallel-Umsetzung von 1 auf die Anzahl der Station (MS1) zugeordneter Subträger durchgeführt, auf die erhaltenen Daten jeweils eine Seriell-/Parallel-Umsetzung auf die Anzahl der Stationen mit zugeordneten Subträgern durchgeführt, die bei den zweiten Seriell-/Parallel-Umsetzungen jeweils erhaltenen Daten werden aufsummiert und auf die verbleibenden Daten wird eine Demodulation, insbesondere eine Fourier-Transformation (FFT), angewendet.

Eine Vorrichtung zum Demodulieren von empfangenen Daten, vorzugsweise durch Durchführen eines entsprechenden Verfahrens weist eine Multiplikationseinrichtung zum Multiplizieren der empfangenen Daten mit einem Faktor auf, insbesondere einem exponentiellen Faktor $e^{-j2\pi\Delta f\cdot u\cdot nT/N}$ mit $\Delta f$ als Abstand der Subträger, u als zugeordnetem Index aus einer Gruppe auf die Vielzahl der Subträger aufgeteilter Teilnehmer und nT/K als Zeitindex.

Eine Seriell-/Parallel-Umsetzungseinrichtung dient zum Umsetzen der empfangenen bzw. multiplizierten Daten auf eine Anzahl von Leitungen, welche der Anzahl zugeordneter Subträger entspricht. Je eine weitere Seriell-/Parallel-Umsetzungseinrichtung an jeweils einem von Ausgängen aus der vorstehenden Seriell-/Parallel-Umsetzungseinrichtung dient zum jeweiligen Umsetzen der umgesetzten Daten auf eine Anzahl entsprechend der Anzahl von Stationen mit zugeordneten Subträgern von Leitungen. Den zweiten Seriell-/Parallel-Umsetzungseinrichtungen sind Additionseinrichtungen zum Aufaddieren der Werte auf deren Ausgangsleitungen zugeordnet.

Die Demodulationseinrichtung dient dabei zum Demodulieren nur der verarbeiteten und über die zugeordneten Subträger empfangenen Daten zum Rückabbilden der Daten.

Vorteilhafterweise wird nach dem Separieren bei der Abbildung anstelle der Modulation der Zwischen-Subträger mit den Null-Werte-Symbolen eine Multiplikation mit einem exponentiellen Faktor zum Verschieben durchgeführt. Dies kann insbesondere durch den Faktor $e^{+j2\varphi\Delta funT/K}$ zum Verschieben der Subträger durchgeführt werden, wobei $\Delta f$ als Abstand der Subträger, u als zugeordneter Index aus einer Gruppe auf die Subträger aufgeteilter Teilnehmer und nT/K als Zeitindex Verwendung findet. Für die Rückabbildung wird anstelle des positiven das entsprechend negative Vorzeichen gewählt. Damit wird eine Modulation durch eine für sich bekannte Fourier-Tansformation, insbesondere Fast Fourier Transformation, auf zugeordnete Subträger ermöglicht.

Berücksichtigt wird auch der Überabtast- bzw. Abtastfaktor K (Oversampling Factor). Für den allgemeinen Fall von U Teilnehmern bzw. Stationen MS1, MS2, ... MSU und M maximal beabstandeten Subträgern, wobei M(U-1) Subträger anderen Teilnehmern bzw. Stationen zugewiesen werden, wird ein Überabtastfaktor K = M * U verwendet. Die Multiplikation mit dem Exponentialfaktor in einem nachfolgenden Schritt verschiebt den Satz der M gleichmäßig und maximal beabstandeten Subträger relativ zu den Sätzen der anderen Stationen.

Weiterhin berücksichtigt werden kann der Einsatz eines Prototypfilters h(nT/K) mit n = ...-1, 0, 1,..., wobei der Filter als Rechteckform in der Zeitdomain K aufeinanderfolgender Einheits-Samples umgesetzt wird. Dies ermöglicht vorteilhafterweise eine niedrigere Komplexität.

Jeder Teilnehmer bzw. jede Station moduliert bzw. demoduliert nur ihre eigenen zugeordneten Subträger ohne die Vorteile der schnellen digitalen Implementierung des MC-Modulationsschemas zu verlieren.

Ein Ausführungsbeispiel wird nachfolgend anhand der Zeichnung näher erläutert. Es zeigen:

FIG 1  Komponenten einer sendenden Station eines Teilnehmers;

FIG 2  Komponenten einer empfangenden Station eines Teilnehmers;

FIG 3  Stationen verschiedener Teilnehmer, welche mit einer Basisstation kommunizieren und eine Datenverarbeitung zum Senden gemäß dem Stand der Technik durchführen; und

FIG 4  ein Filterbank-Mehrträger-Schema.

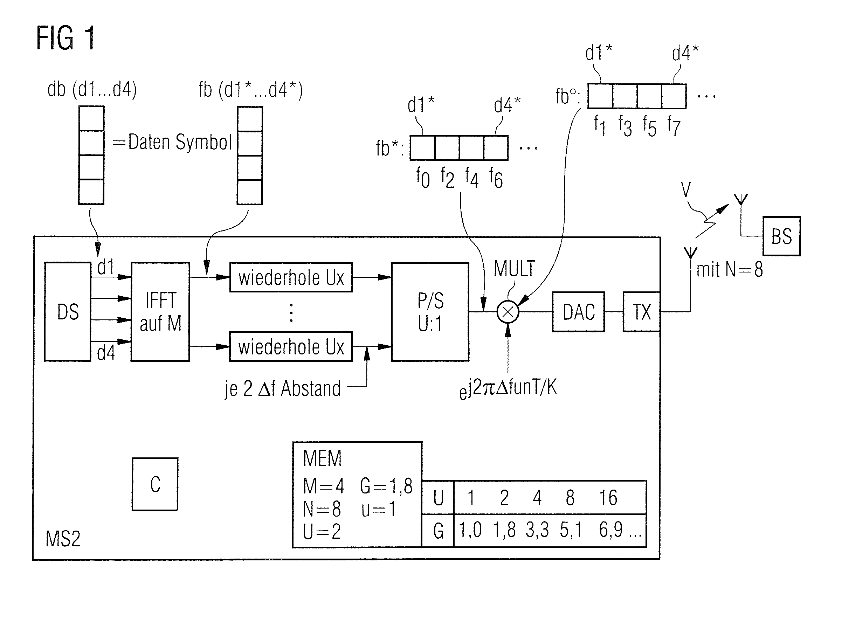

Wie dies aus FIG 1 ersichtlich ist, wird eine Vorrichtung zum Abbilden von Datensymbolen d1, d2, d3, d4 einer Datenquelle DS bzw. eines Teilnehmers auf eine der Datenquelle DS bzw. dem Teilnehmer zugeordnete Anzahl M von zueinander separierten Subträgern einer Vielzahl N von Subträgern f0, f1, .... f7 eines Mehrträger-Systems MC zum Beispiel durch eine mobile Station MS2 des Teilnehmers ausgebildet. Die mobile Station MS2 weist eine Vielzahl von Komponenten auf, wobei vorliegend nur die Komponenten dargestellt sind, welche für das Verständnis des Verfahrens zum Abbilden von den Datensymbolen auf die zugeordneten Subträger erforderlich sind. Der mobilen Station MS2 werden z.B. die zweiten, vierten, sechsten und achten Subträger f1, f3, f5, f7 zugeordnet.

Neben für sich bekannten Stationen MS2 können auch speziell für das Verfahren ausgebildete Stationen bereitgestellt werden. Neben der Implementierung einzelner Komponenten durch Hardware-Elemente ist auch eine Implementierung durch eine entsprechende Software-Steuerung einer reduzierten Anzahl von Komponenten, insbesondere eines zentralen Prozessor-Chips möglich.

Zum Veranschaulichen der Funktionalität und Verfahrensweise wird beispielhaft von einem Kommunikationssystem mit zwei teilnehmerseitigen Stationen MS2, MS1 ausgegangen, wie dies anhand FIG 3 beschrieben ist. Weiterhin wird davon ausgegangen, dass die Gesamtanzahl einer Vielzahl N der Subträger f0, f1, ... f7 8 beträgt. Die einzelnen Subträger sind äquidistant um eine Frequenzdifferenz Δf beabstandet, d.h. f1 = f0+Δf, f2 = f0+2Δf, .... Bei der gewählten Gesamtanzahl N = 8 der Subträger f0, f1, ..., f7 und der Gesamtanzahl U = 2 der Teilnehmer bzw. Stationen MS1, MS2 ergibt dies eine verfügbare Anzahl M der Subträger f0, f1, ..., f7 von 4 pro Teilnehmer bzw. Station MS1, MS2, d.h. M = N/U = 4. Beispielhaft wird das Verfahren bei einem OFDM-FDMA-Verfahren mit Interleaving (Verschachtelung) verwendet. Eine Übertragung auf andere Kommunikationssysteme ist jedoch im Rahmen des Fachwissens möglich.

Zur allgemeinen Steuerung auch anderer Komponenten und Abläufe weist die Station MS2 eine zentrale Steuereinrichtung C sowie einen Speicher MEM zum Hinterlegen von Daten und Steuerprogrammen auf. Die von der Station MS2 zu einer entfernten Station, insbesondere Basisstation BS zu übertragenden Daten ..., d1, d2, d3, d4, ... werden von einer Datenquelle DS bereitgestellt. Die Datenquelle DS gibt aufeinanderfolgend die Datenwerte aus, wobei gemäß dem bevorzugten Ausführungsbeispiel für die vorliegende Konstellation auch eine parallele Ausgabe über vier Datenleitungen mit jeweils vier aufeinanderfolgenden Daten bzw. Datensymbolen d1, ..., d4 erfolgen kann. Ausgegeben wird somit ein Datenblock db mit einer Anzahl von Daten bzw. Datensymbolen d1, ..., d4 entsprechend der Anzahl m von Subträgern, welche der Station MS2 zugeordnet sind.

Die von der Datenquelle DS bereitgestellten Datensymbole d1, ..., d4 werden dem Eingang einer Modulationseinrichtung IFFT zum Durchführen einer Mehrträger-Modulation (MC-Modulation) auf eine entsprechende Anzahl M = 4 von Subträgern f0, f2, f4, f6 angelegt, wobei eine spätere Frequenzverschiebung bei diesem Schritt noch nicht berücksichtigt wird. Die Modulationseinrichtung IFFT führt die Modulation vorzugsweise mit Hilfe einer inversen schnellen Fourier-Transformation auf M Subträger durch. Je nach Umsetzung kann die Modulationseinrichtung IFFT eine einzige serielle oder bevorzugt eine Vielzahl paralleler Ausgangsleitungen zum Ausgeben der modulierten Daten bzw. Datensymbole d1$^*$, d2$^*$, d3$^*$, d4$^*$ aufweisen.

Insbesondere im Fall eines im Zeitbereich rechteckigen Prototyp-Filters werden die von der Modulationseinrichtung IFFT ausgegebenen Daten d1$^*$, ..., d4$^*$ werden einer Repetitionseinrichtung REP zugeführt, welche den jeweiligen Datenwert d1$^*$, d2$^*$, d3$^*$ bzw. d4$^*$ empfängt und vervielfacht ausgibt. Für den Fall einer gleichmäßigen Aufteilung der Gesamtanzahl N der Subträger auf die Gesamtanzahl U der Teilnehmer bzw. Stationen MS1, MS2 entspricht die Vervielfachung dem Wert der Gesamtanzahl U der Teilnehmer, vorliegend also 2.

Die von der Repetitionseinrichtung REP bereitgestellten modulierten Datenblöcke fb$^*$ werden einem Parallel-/Seriell-Umsetzer P/S zugeführt, welcher eine Umsetzung der M Eingangsleitungen auf eine Ausgangsleitung vornimmt. Ausgegeben wird somit ein Mehrträger- bzw. MC-Symbol fb$^*$. Am Ausgang der Repetitionseinrichtung oder der Vielzahl von Repetitionseinrichtungen REP stehen somit zwei aufeinanderfolgende Datenblöcke fb$^*$ mit den modulierten Daten d1$^*$, d2$^*$, d3$^*$, d4$^*$ bereit. Diese Datenwerte sind einzelnen Subträgern derart zugeordnet, dass der erste, dritte, fünfte und siebte Subträger f0, f2, f4, f6 den Datenwerten zugeordnet sind. Der Abstand der Subträger zueinander entspricht dabei dem U-fachen der Differenz Δf zwischen zwei einzelnen, direkt benachbarten Subträgern f0, f1.

Die erforderliche Beabstandung der Subträger f0, f2, f4, f6 bzw. f1, f3, f5, f7 wird durch eine Überabtastung für jeden Teilnehmer bzw. dessen Station erzielt. Jedoch wird dabei in einem ersten Schritt nur die Gruppe der einander zugeordneten Subträger f0, f2, f4, f6 für die erste Station MS1 berücksichtigt. Der zweiten Station MS2 ist jedoch die zweite Gruppe der einander zugeordneten Subträger f1, f3, f5, f7 zugeordnet, welche gegenüber der ersten Gruppe um die Frequenzdifferenz Δf verschoben ist.

Das MC-Symbol wird einer Multiplikationseinrichtung MULT zugeführt, wobei die zugeführten modulierten Daten mit einem exponentiellen Faktor multipliziert werden. Der exponentielle Faktor berücksichtigt die noch fehlende Beabstandung der ausgegebenen Subträger zwischen den einzelnen Stationen MS1 bzw. MS2. Der exponentielle Faktor führt je nach Exponentialwert zu einer Verschiebung der Subträger. Der exponentielle Faktor wird aufgebaut durch

$$e^{j2\pi\Delta f \cdot u \cdot nT/N}.$$

Dabei steht j für die Kennzeichnung als komplexe Größe, Δf als Abstand zwischen zwei direkt benachbarten Subträgern f0, f1; f1, f2; ..., u als Stationsnummer der Station MSu im Kommunikationssystem mit u = 0, 1, ..., und nT/K für den momentanen Zeitindex.

Bei der ersten Station MS1 des ersten Teilnehmers ist die Stationsnummer u = 0, so dass eine Multiplikation mit dem Faktor 1 durchgeführt wird. Das MC-Symbol wird somit hinsichtlich seiner zugeordneten Frequenzen nicht verändert, so dass das MC-Symbol fb° nach der Multiplikation Daten aufweist, die dem ersten, dritten, fünften und siebten Subträger f0, f2, f4, f6 zugeordnet sind. Bei der zweiten Station MS2 ist die Stationsnummer u = 1, womit die Multiplikation mit dem Faktor

$$e^{j2\pi\Delta f \cdot 1 \cdot nT/N}.$$

durchgeführt wird. Dies entspricht einer Frequenzverschiebung um die einfache Frequenzdifferenz Δf, so dass die modulierten Datenwerte d1*, ... nun den versetzten zweiten, vierten, sechsten bzw. achten Subträgern f1, f3, f5 bzw. f7 zugeordnet sind.

Das multiplizierte MC-Symbol wird abschließend einer Digital-/Analog-Umsetzeinrichtung DAC zum Analogisieren und einer Sendeeinrichtung TX zugeführt. Die Sendeeinrichtung TX überträgt das derart bereitgestellte Signal über eine Funkschnittstelle V mit N = 8 Subträgern f0, f1, ..., f7 zu der Basisstation BS.

Die Vorrichtung bzw. ein entsprechend ausgestaltetes Verfahren reduzieren somit die erforderliche Rechenkomplexität der Station bzw. des Terminals MS1, MS2 des Teilnehmers auf der Senderseite im Uplink-Szenario bzw. entsprechend auch auf der Empfängerseite im Downlink-Szenario durch ein Neusortieren der allgemeinen Implementierung eines nicht kritisch gesampelten (abgetasteten) Filterbank-(FB)-MC-Modulationssystems, wie dies für sich aus G. Cherubini et al. [7] bekannt ist und anhand FIG 4 nachfolgend beschrieben wird.

Beim vorliegenden Verfahren und der vorliegenden Vorrichtung wird die Belegung/Rückumwandlung (Allocation/Deallocation) beim Implementieren eines MU-MC-verschachtelten FDMA-Systems mit einer deutlich geringeren Komplexität hinsichtlich der üblicherweise verwendeten Annäherung ausgeführt. Die Implementierung wird durch das Hochsetzen der gewünschten MC-Modulation als die allgemeine nicht kritisch abgetastete FB-MC-Modulation und das Verwenden eines Oversampling-Faktors (Überabtastfaktor) zum Einführen des MU-Zugriffs umgesetzt. Dabei senden die Teilnehmer bzw. deren Stationen keine Null-Werte auf die Subträger, welche anderen Teilnehmern bzw. deren Stationen zugeordnet sind. Die Stationen führen eine MC-Modulation dahingegen nur auf ihren eigenen zugeordneten Subträgern durch.

Gemäß einem einfachen allgemeinen Beispiel findet die Anwendung im Fall des OFDM-Systems statt, wobei die MC-Modulation über die IFFT-Operation auf N-Abtastwerten implementiert wird, wobei N der Anzahl von Subträgern entspricht. Allgemein bekannt ist, dass OFDM ein Spezialfall des allgemeinen FB-MC-Systems aus [7] darstellt, wobei die Anzahl N der Subträger gleich dem Überabtastfaktor K (K = N) gewählt wird und der Prototypfilter h (nT/K), n = ..., -1, 0, 1, ... eine Rechteckform im Zeitbereich hat, d.h. aus K aufeinanderfolgenden Einheitssamples besteht. In diesem Fall gilt dann K = UM mit K = N als der Gesamtzahl verfügbarer Subträger in dem System, U als der Gesamtanzahl von Teilnehmern bzw. Stationen und M als der Gesamtanzahl von Subträgern, welche jedem Teilnehmer zugeordnet sind.

Mit dieser ausgewählten Einstellung wird für OFDM-Systeme eine gering komplexe verschachtelte Subträger-Anordnung erzielt, wie folgt. Die Einstellungen genügen allen Annahmen, die für eine schnelle digitale Implementierung der allgemeinen nicht kritisch abgetasteten FB-MC-Modulation durch eine schnelle Fourier-Transformation unter Einsatz von Bänken aus Polyphasen-Filtern erforderlich sind. Daher kann jeder Teilnehmer bzw. jede Station die Multiträger-Übertragung über ihre M zugeordneten Subträger durch Durchführen der inversen schnellen Fourier-Transformation auf M Abtastwerte bzw. Daten oder Datensymbole implementieren, woraufhin eine Filterung auf jeden Ausgangswert der inversen schnellen Fourier-Transformation einer periodisch zeitvarianten Polyphasen-Komponente hinsichtlich des Faktors K des Prototypfilters durchgeführt wird. Dies gilt auch für den Fall eines Polyphasenfilters mit einer anderen als der Rechteckform. Unter der Annahme, dass der Prototypfilter eine Rechteckform im Zeitbereich aufweist, stellen sich seine Polyphasen-Komponenten stets als Zeit-Invariante-Kronecker-A-Funktionen dar, wobei sie keine Beiträge abgeben. In letzterem Fall bietet sich der Einsatz von OFDM mit der beschriebenen Repetition anstelle des Polyphasenfilters vorteilhaft an.

Die Einführung einer Redundanz wird durch eine Wiederholung bzw. Repetition der Ausgangswerte der inversen schnellen Fourier-Transformation um das U-fache bewirkt. Auf diese Art und Weise wird die Übertragung der Daten der Station des einzelnen Teilnehmers auf M gleichmäßig beabstandete Subträger, den 0-ten, den U-ten, den 2U-ten, ... (den MU-(U-1)-ten) effizient implementiert, ohne dass die Übertragung nicht erforderlicher Null-Werte vorgenommen wird. Um die Teilnehmer bzw. deren Stationen zu separieren, d.h. per Interleaving zu verschachteln, wird anschließend eine zusätzliche Frequenzverschiebung in der digitalen Domain implementiert, welche verschiedenen Teilnehmern bzw. deren Stationen verschiedene Sätze gleich beabstandeter Subträger zuweist. Dies wird durch die Multiplikation mit dem exponentiellen Faktor $e^{j2\pi\Delta f \cdot u \cdot nT/N}$ durchgeführt, wobei u für die Nummer der Station bzw. des Teilnehmers mit u = 0, 1, ..., U-1 steht, nT/N für den Zeitindex steht und Δf für den Abstand der Subträger-Frequenz steht.

Die Implementierung besteht somit verfahrensgemäß aus der Durchführung einer Modulation, insbesondere inversen schnellen Fourier-Transformation auf M Abtastwerte bzw. Daten, eine U-fache Repetition, einer Parallelverarbeitung einer Parallel-Seriell-Umsetzung von U zu 1 und einer Multiplikation mit einem exponentialen Faktor. Im Vergleich zur klassischen Annäherung wird die Interleaving-Anordnung mit Blick auf eine inverse schnelle Fourier-Transformation über K = N Abtastwerte bzw. Daten durchgeführt.

Um den Gewinn G mit Blick auf die Komplexität des vorgeschlagenen Ansatzes relativ zu dem traditionellen Verfahren zu bestimmen, kann das Verhältnis zwischen der Anzahl komplexer Multiplikationen betrachtet werden, welche für die beiden Fälle erforderlich sind. Als Verhältnis wird dabei

$$G = \frac{K \log K}{K + \frac{K}{U}\log\frac{K}{U}} > 1$$

erhalten. Diese Gleichung kann unter der Annahme K = MU, d.h. jeder Teilnehmer sendet auf der gleichen Anzahl von Subträgern und der Anforderung, dass der Gewinn > 1 sein soll, vereinfacht werden zu

$$\log m > \frac{U}{U - 1}(1 - \log U).$$

Dies wird stets verifiziert, wenn ein Mehrteilnehmer-Szenario besteht, d.h. die Gesamtanzahl der Teilnehmer U > 1 ist. Bei einer Betrachtung der resultierenden Werte ist eine Verbesserung bzw. ein Gewinn G festzustellen. Bei einem Teilnehmer beträgt der Gewinn G = 1,0, bei zwei Teilnehmern gilt G = 1,8, bei vier Teilnehmern gilt G = 3,3, ... bei 256 Teilnehmern gilt G = 9,0.

Erzielt wird somit eine reduzierte Komplexität bei der Implementierung einer Frequenzabbildung bzw. Frequenz-Rückabbildung bei allgemein gleichmäßig beabstandeten Subträgern in mehrträgermodulierten Systemen.

Neben einer Reduzierung des Rechenaufwands bei der Modulation kann auch der Rechenaufwand bei der Demodulation in entsprechender Art und Weise reduziert werden. Insbesondere sind die Anwendung im Fall der Modulation und der Demodulation nicht voneinander abhängig, so dass beispielsweise die Modulation und die Demodulation nur in einer mobilen Station eines Teilnehmers durchgeführt werden können, um in dieser die Rechenkomplexität zu reduzieren, während in einer Basisstation, in der Aspekte der Rechenkomplexität, des Speicherraums und des Energieverbrauchs weniger relevante Größen für die Planung bei der Konstruktion sind, entfallen können.

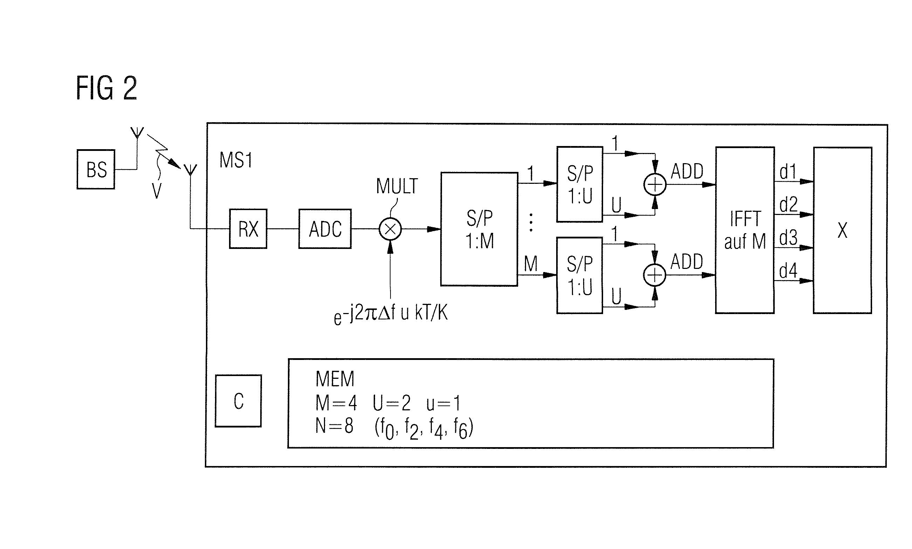

Wie dies aus FIG 2 ersichtlich ist, sendet eine Basisstation BS Daten über eine Funkschnittstelle V zum Teilnehmer bzw. zu dessen mobiler Station MS1, wobei für die Übertragung wiederum ein vorgegebener Satz von Subträgern f0, f2, f4, f6 für eine beispielhafte MC-FDMA-Anwendung mit Interleaving verwendet wird. Über die Funkschnittstelle V werden außerdem weitere Daten zu weiteren Stationen auf weiteren Subträgern des verfügbaren Trägerbandes übertragen.

Die Station MS1 des Teilnehmers erfasst beim dargestellten Ausführungsbeispiel nur ihre eigenen Daten, verwendet somit eine Art Einzelteilnehmer-Detektion, wobei die Daten auf den weiteren Subträgern ignoriert werden. Daher besteht für die Station MS1 nicht das Erfordernis, eine MC-Demodulation aller Subträger durchzuführen, beispielsweise mittels einer schnellen Fourier-Transformation FFT bei OFDM. Dies bringt gegenüber dem klassischen Ansatz, bei dem jede Station alle Subträger MC-demoduliert und dann anschließend die auf den anderen Teilnehmern zugeordneten Subträgern empfangenen Daten wegwirft, den Vorteil einer deutlich verringerten Berechnungskomplexität.

Ein bevorzugtes Ausführungsbeispiel für eine reduzierte MC-Demodulation kann durch ein schnelles Implementationsschema bereitgestellt werden, welches für ein OFDM-MC-System durch beispielsweise die Auswahl einer Anordnung und Einstellung, wie dies aus [3] für sich bekannt ist, und durch Anwenden auf der Empfängerseite des überabgetasteten FB-MC-Systems, wie dies aus [7] für sich bekannt ist, abgeleitet wird. Die bevorzugte Umsetzung für eine Anwendung bei einer reduzierten Anzahl von zu berücksichtigenden Subträgern weist die Schritte von K komplexen Multiplikationen mit dem Faktor $e^{-j2\pi ukT/K}$, eine anschließende Seriell-/Parallel-Umsetzung von 1 zu M, M Seriell-/Parallel-Umsetzung von 1 zu U, M (U-1) Summenbildungen und eine Fourier-Transformation FFT auf M Abtastwerte auf. Die Komplexität der mathematischen Berechnungen kann durch die Anzahl komplexer Multiplikationen ausgedrückt werden, welche wiederum K + M log M ergibt, wie dies auch beim Aufwärtsverbindungsfall war. Dies ist eine deutliche Reduzierung gegenüber dem Aufwand beim klassischen Ansatz mit K log K erforderlichen komplexen Multiplikationen. Folglich bietet das Abwärtsverbindungs-Szenario des vorliegenden Ansatzes die gleiche Verbesserung bzw. der gleiche Gewinn mit Blick auf die Komplexität wie bei der Aufwärtsverbindung. Der Gewinn hängt wiederum von der Anzahl der Teilnehmer im System ab.

Wie dies aus FIG 2 ersichtlich ist, weist die Station MS1 eine Empfangseinrichtung RX zum Empfangen der über die Funkschnittstelle V übertragenen Daten auf, wobei Sende- und Empfangseinrichtung auch als eine kombinierte Einrichtung ausgeführt sein können. Die empfangenen Daten werden einem Analog-/Digital-Umsetzer ADC zugeführt, welcher eine Umsetzung in digitale Daten vornimmt. Diese digitalen Daten werden einem Multiplikationsglied zugeführt, um darin mit dem Exponenten $e^{-j2\pi\Delta fukT/K}$ multipliziert zu werden. Das Multiplikationsergebnis wird einem Seriell-/Parallel-Wandler S/P für eine Umsetzung auf M Ausgangsleitungen zugeführt. Jede der Ausgangsleitungen führt zu einem weiteren Seriell-/Parallel-Umsetzer zur Umsetzung der empfangenen Daten auf U Ausgangsleitungen. Die Werte dieser U Ausgangsleitungen werden einer Additionsanordnung mit zumindest einem Additionsglied ADD zugeführt und darin aufaddiert. Die resultierenden M Ausgangsleitungen der Additionsanordnungen ADD werden den Eingängen einer Demodulationseinrichtung FFT zugeführt. Die Demodulation in der Demodulationseinrichtung FFT wird vorteilhafterweise durch eine schnelle Fourier-Transformation auf M Datenwerte umgesetzt. Die M Ausgangsleitungen der Demodulationseinrichtung FFT stellen letztendlich die rekonstruierten Daten bzw. Datensymbole d1, d2, d3, d4 bereit, welche einem Ausgang oder einer weiteren Verarbeitungseinrichtung X zugeführt werden. Die Steuerung des Ablaufs wird wiederum durch eine zentrale Steuereinrichtung C vorgenommen. Möglich ist auch die vollständige oder teilweise Umsetzung der baulichen Anordnung in eine Software-Lösung, d.h. in eine verfahrenstechnische Lösung der einzelnen beschriebenen Schritte. In üblicher Art und Weise weist die Station MS1 unter anderem auch einen Speicher MEM auf, in dem die für den konkreten Anwendungsfall erforderlichen Programmroutinen und Kommunikationsparameter hinterlegt sind. Letzteres sind beispielsweise wiederum die Gesamtanzahl M = 4 der für die Station MS1 verfügbaren Subträger f0, f2, f4, f6, die Gesamtanzahl N = 8 der im System bzw. auf dem Träger verfügbaren Subträger f0, f1, ... f7, die Gesamtanzahl U = 2 der momentanen Teilnehmer und die zugewiesene Stationsnummer u = 1 für diesen Teilnehmer bzw. dessen Station MS1.

Bei den vorstehenden Ausführungsbeispielen zum Modulieren bzw. zum Demodulieren wurde davon ausgegangen, dass die Vielzahl N von Subträgern f0, f1, ..., f7 gleichmäßig auf die Anzahl U von Stationen MS1, MS2 verteilt wird. Prinzipiell sind auch andere Zuteilungsschemata für die Subträger möglich. Besonders bevorzugt werden dabei Zuordnungsschemata, bei denen ausgehend von einer Basisanzahl von zugeordneten Subträgern, z. B. 2 oder 4 einer Station, jeweils ein Vielfaches dieser Basisanzahl an Subträgern zugeordnet wird. Entsprechend kann dann die Modulationsvorrichtung bzw. Demodulationsvorrichtung entsprechend umfangreicher ausgebildet werden, wobei die unterschiedliche Anzahl bei der Repetitionsvorrichtung REP und bei der Multiplikation durch Auswahl geeigneter Faktor-Parameter bzw. bei dem Multiplikationsglied MULT zu berücksichtigen ist. Bei alternativen Ausführungsformen ist dabei zu berücksichtigen, dass die nach der Modulation ausgegebene Anzahl von Werten der Anzahl von insgesamt auf dem Träger verfügbaren Subträgern angepasst wird. Bei der Multiplikation ist eine entsprechende Verschiebung, im Fall eines frequenzunterteilten Trägers eine entsprechende Frequenzverschiebung, zu berücksichtigen.

Das beschriebene System, bei dem jede Station MS1, MS2 nur die ihr zugeordneten M Subträger moduliert, beruht in der einfachsten Ausführungsform auf dem Gedanken, dass alle Stationen mit der gleichen Anzahl M von Subträgern senden bzw. darüber empfangen. Für jede Station wird eine zueinander verschiedene Frequenzverschiebung eingeführt. Dies wird durch Multiplizieren des MC-Symbols, welches aus N = K Abtastwerten bzw. Daten besteht, mit dem exponentiellen Faktor $e^{j2\pi\Delta fku/K}$ durchgeführt, wobei k/K dem Zeitindex, u dem Stationsindex bzw. der Stationsnummer und $\Delta f$ der Subträger-Beabstandung entspricht. Diese Frequenzverschiebung wird in der digitalen Domaine implementiert, wobei sie konstant ist und außerdem für die zueinander verschiedenen Stationen unterschiedlich ist.

Im nicht kritisch abgetasteten Fall hängt die Modulation bzw. die Fourier-Transformation nicht von dem Überabtastfaktor K sondern nur von der Anzahl M zugeordneter Subträger ab. Dadurch kann jede Station eine Fourier-Transformation über nur die Anzahl von Subträgern durchführen, welche sie verwendet. Ausgehend von dem Filterbank-Mehrträger-Schemata (FIG 4) wird eine Implementierung unter Berücksichtigung der vorstehend beschriebenen Formeln verständlich. Die IDFT-Operation (IDFT: Inverse Discrete Fourier Transformation) hängt bei Berücksichtigung des nicht kritisch abgetasteten Falls nicht vom Überabtastfaktor K sondern nur von der Anzahl M der verwendeten Subträger ab. Dies bedeutet, dass jede Station eine Fourier-Transformation nur über die Anzahl M der von dieser Station verwendeten Träger durchführt. Unter dieser Annahme kollabiert in Formel (8) die Summe zu nur einem einzigen Term, da die Prototyp-Filterdauer exakt T ist, wobei K Abtastwerte durch T/K definiert sind. Die Filter-Polyphasen-Komponenten bezüglich K sind nur Kronecker-Delta-Funktionen und haben keinen Einfluss auf die Ausgangswerte der Fourier-Transformation. Formel (8) vereinfacht sich zu

$$s(l\,\frac{T}{U} + i\,\frac{T}{K}) = A_i(nT)h(l\,\frac{T}{U} + i\,\frac{T}{K}) \qquad\qquad (11)$$

mit i = 0, ..., M. Wenn der Fall eines OFDM-Symbols betrachtet wird, sind alle Werte von 1 = 0, ..., U-1 zu berücksichtigen. Mit diesen Werten von i und 1 variieren die Argumente von s(·) und h(·) von 0 zu K-1, h(·) kollabiert stets zu einem Kronecker-Delta und das resultierende Signal stellt sich nur als die U-fache Repetition des Ausgangswertes der Fourier-Transformation dar.

Mit diesem mathematischen Hintergrund werden die vorstehenden Verfahrensweisen und Vorrichtungen, welche eine Modulation nur der tatsächlich verwendeten Subträger ermöglichen, verständlich.

Unter der Annahme eines möglichen OFDM-Systems mit einer Gesamtanzahl N = K von 512 Subträgern, einer Gesamtanzahl U = 8 Teilnehmern bzw. Stationen und der Komplexitätsannahme für die inverse Fourier-Transformation als N log N, wobei N die Anzahl von Punkten angibt, auf welchen die Fourier-Transformation ausgeführt wird, ergibt sich eine Gesamtanzahl M = 64 Subträger pro Station. Während gemäß den bekannten Modulationen über die Gesamtanzahl der Träger 4608 komplexe Multiplikationsschritte durchzuführen sind, sind bei dem vorliegenden Ansatz nur 890 komplexe Multiplikationsschritte erforderlich.

Die Verfahrensweisen und Vorrichtungen sind anhand von beispielhaften mobilen Teilnehmerstationen beschrieben. Eine Umsetzung auf Basisstationen ist prinzipiell möglich, sofern eine solche Basisstation nicht notwendigerweise stets alle Subträger zu berücksichtigen hat, um sämtliche Stationen beim Senden bzw. Empfangen zugleich berücksichtigen zu können.

**Patentansprüche**

1. Verfahren zum Abbilden von Daten (d1, d2, d3, d4) einer Datenquelle (DS) einer Station (MS2) auf eine der Station (MS2) zugeordnete Anzahl (M) von Subträgern (f1, f3, f5, f7) einer Vielzahl (N) von Subträgern (f0, f1, ... f7) eines Mehrträger-Systems, bei dem eine Folge der Daten (d1, ... d4) der Station (MS2) zum Separieren von weiteren Daten auf zueinander gleichmäßig beabstandete der Subträger (f1, f3, f5, f7) moduliert wird,
   **dadurch gekennzeichnet, dass**
   beim Modulieren der Daten (d1, ... d4) nur die der Station (MS2) zugeordneten Subträger (f1, f3, f5, f7) moduliert werden.

2. Verfahren nach Anspruch 1, bei dem
   zum Verschieben der zugeordneten Subträger eine Multiplikation mit einem exponentiellen Faktor durchgeführt wird.

3. Verfahren nach einem vorstehenden Anspruch, bei dem
   zum Separieren der Abstand der zugeordneten Subträger (f1, f3, f5, f7) anhand einer nicht-kritischen Überabtastung festgelegt wird.

4. Verfahren nach einem vorstehenden Anspruch, bei dem
   nach der Modulation eine Repetition der modulierten Daten (d1*, d2*, d3*, d4*) durchgeführt wird.

5. Verfahren nach einem vorstehenden Anspruch, bei dem
   die Modulation mittels einer Fourier-Transformation (IFFT) auf die zugeordneten Subträger (f1, f3, f5, f7) durchgeführt wird.

6. Verfahren nach einem vorstehenden Anspruch, bei dem
   auf eine aufeinanderfolgende Anzahl von Daten (d1, ... d4), die der Anzahl (M) von zugeordneten Subträgern (f1, f3, f5, f7) entspricht,

   - eine Modulation mittels einer inversen schnellen Fourier-Transformation (IFFT) auf die zugeführten Daten durchgeführt wird,
   - eine Repetition der jeweiligen modulierten Daten (d1*, d2*, d3$^*$, d4$^*$) entsprechend der Anzahl (U) von Stationen (MS1, MS2) durchgeführt wird,
   - eine Parallel-/Seriell-Umsetzung auf eine Ausgangsleitung durchgeführt wird, und
   - eine Multiplikation der modulierten Daten (d1$^*$, d2$^*$, d3$^*$, d4$^*$) mit einem exponentiellen Faktor unter Berücksichtigung eines Abstands ($\Delta$f) der Subträger (f0, f1, ..., f7), einer Gruppennummer (u) der Station (MS2) aus der Anzahl (U) der Stationen (MS1, MS2) und einem Laufindex durchgeführt wird.

7. Vorrichtung in einer Station (MS2) eines Kommunikationssystems zum Abbilden von Daten (d1, d2, d3, d4) einer Datenquelle (DS) auf eine der Datenquelle zugeordnete Anzahl (M) von zueinander separierten Subträgern (f1, f3, f5, f7) einer Vielzahl (N) von Subträgern (f0, f1, ..., f7) eines Mehrträger-Systems, mit

   - zumindest einer Datenquelle (DS) zum Bereitstellen einer Folge von Daten (d1, d2, d3, d4),
   - einer Modulationseinrichtung (IFFT) zum Modulieren der Daten (d1, ..., d4) auf die Subträger (f1, f3, f5, f7) und
   - einer Ausgabeeinrichtung (TX) zum Ausgeben der verarbeiteten Daten,

   **dadurch gekennzeichnet, dass**

   - die Modulationseinrichtung (IFFT) zum Modulieren nur der der Station (MS2) zugeordneten Subträger (f1, f3, f5, f7) ausgebildet ist.

8. Vorrichtung nach Anspruch 7, mit

einer der Modulationseinrichtung (IFFT) nachgeschalteten Repetitionseinrichtung (REP) zum Vervielfachen der durch die Modulationseinrichtung (IFFT) jeweils ausgegebenen Daten (d1$^*$, d2$^*$, d3$^*$, d4$^*$).

9. Vorrichtung nach Anspruch 7 oder 8,
mit einer Multiplikationseinrichtung (MULT) zum Multiplizieren der modulierten Daten (d1$^*$, d2$^*$, ...) mit einem exponentiellen Faktor zum Verschieben zu anderen Frequenzen.

10. Verfahren zum Rückabbilden von Daten (d1, d2, d3, d4) in einer die Daten empfangenden Station (MS1), bei dem die Daten über eine Anzahl (M) den Daten zugeordneter Subträger (f0, f2, f4, f6) eines Trägers mit einer Vielzahl (N) von Subträgern (f0, f1, ..., f7) eines Mehrträger-Systems empfangen werden, und wobei die zugeordneten Subträger zum Separieren der Daten der Station voneinander gleichmäßig beabstandet sind,
**dadurch gekennzeichnet, dass**
beim Rückabbilden nur empfangene Daten der zugeordneten Subträger (f0, f2, f4, f6) verarbeitet werden.

11. Verfahren nach Anspruch 10, bei dem
auf die empfangenen Daten eine Multiplikation mit einem die zugeordneten Subträger verschiebenden Faktor angewendet wird.

12. Verfahren nach Anspruch 11, bei dem
auf die multiplizierten Daten eine Seriell-/Parallel-Umsetzung auf die Anzahl (M) der zugeordneten Subträger angewendet wird.

13. Verfahren nach Anspruch 12, bei dem
auf die Daten eine weitere Seriell-/Parallel-Umsetzung auf jeweils die Anzahl (U) Stationen (MS1, MS2), welchen Subträger zugeordnet wurden, angewendet wird, und bei dem die aus der weiteren Seriell-/Parallel-Umsetzung erhaltenen Daten jeweils aufsummiert werden.

14. Verfahren nach einem der Ansprüche 10 bis 13, bei dem eine Demodulation (FFT) auf die verbleibenden Daten zum Bereitstellen rückabgebildeter Daten angewendet wird.

15. Verfahren nach einem der Ansprüche 10 bis 14, bei dem

- auf die empfangenen Daten eine Anzahl (K), welche einer Anzahl von Repetitionen (U) mit zugeordneten Subträgern entspricht, komplexer Multiplikationen durchgeführt wird,
- eine Seriell-/Parallel-Umsetzung von 1 auf die Anzahl (M) der Station (MS1) zugeordneter Subträger durchgeführt wird,
- auf die erhaltenen Daten jeweils eine Seriell-/Parallel-Umsetzung auf die Anzahl (U) der Stationen (MS1, MS2) mit zugeordneten Subträgern durchgeführt wird,
- die bei den zweiten Seriell-/Parallel-Umsetzungen jeweils erhaltenen Daten aufsummiert werden, und
- auf die verbleibenden Daten eine Demodulation (FFT) angewendet wird.

16. Vorrichtung in einer Station (MS) eines Kommunikationssystems zum Rückabbilden von Daten (d1, d2, d3, d4), wobei die Daten über eine Anzahl (M) der Vorrichtung (MS) und/oder den Daten zugeordneter Subträger (f0, f2, f4, f6) eines Trägers mit einer Vielzahl (N) von Subträgern (f0, f1, ..., f7) eines Mehrträger-Systems empfangen werden, und wobei die zugeordneten Subträger zum Separieren der Daten voneinander gleichmäßig beabstandet sind, mit

- einer Demodulationseinrichtung (FFT) zum Demodulieren der über die Subträger empfangenen Daten, **dadurch gekennzeichnet, dass**
- die Demodulationseinrichtung zum Demodulieren von über nur die zugeordneten Subträger (f0, f2, f4, f6) empfangenen Daten zu den rückabgebildeten Daten (d1, ..., d4) ausgebildet ist.

17. Vorrichtung nach Anspruch 16, mit
einer Multiplikationseinrichtung (MULT) zum Multiplizieren der empfangenen Daten mit einem Faktor.

18. Vorrichtung nach Anspruch 16 oder 17, mit
einer Seriell-/Parallel-Umsetzungseinrichtung zum Umsetzen der empfangenen bzw. multiplizierten Daten auf eine Anzahl von Leitungen, welche der Anzahl (M) zugeordneter Subträger entspricht.

19. Vorrichtung nach Anspruch 18, mit

- je einer weiteren Seriell-/Parallel-Umsetzungseinrichtung (S/P) an jeweils einem von Ausgängen aus der vorstehenden Seriell-/Parallel-Umsetzungseinrichtung (S/P) zum jeweiligen Umsetzen der umgesetzten Daten auf eine Anzahl (U) entsprechend der Anzahl von Stationen (MS1, MS2) mit zugeordneten Subträgern von Leitungen, und
- den weiteren Seriell-/Parallel-Umsetzungseinrichtungen (S/P) zugeordneten Additionseinrichtungen (ADD) zum Aufaddieren der Werte auf deren Ausgangsleitungen.

20. Vorrichtung nach einem der Ansprüche 16 bis 19, mit der Demodulationseinrichtung (FFT) zum Demodulieren nur der verarbeiteten und über die zugeordneten Subträger (f0, f2, f4, f6) empfangenen Daten zum Rückabbilden der Daten (d1, ..., d4).

FIG 1

db (d1...d4)    fb (d1*...d4*)

=Daten Symbol

fb*:  | | | | |  ...
     $f_0$ $f_2$ $f_4$ $f_6$
     d1*      d4*

d1*          d4*
fb°:  | | | | |  ...
     $f_1$ $f_3$ $f_5$ $f_7$

DS → d1 ... d4 → IFFT auf M → wiederhole Ux ... wiederhole Ux → P/S U:1 → MULT ⊗ → DAC → TX → mit N=8 → BS

$e^{j2\pi\Delta f u n T/K}$

je 2 Δf Abstand

C

MEM
M=4   G=1,8
N=8   u=1
U=2

| U | 1 | 2 | 4 | 8 | 16 |
|---|---|---|---|---|---|
| G | 1,0 | 1,8 | 3,3 | 5,1 | 6,9 ... |

MS2

EP 1 521 389 A2

FIG 2

## FIG 3  Stand der Technik

MSu | TX

M=4 Datensymbole

Interleaving

K=8 Subträger insgesamt

Mod.

UL

V

BS

| f0 | f0+$\Delta$f | f0+2$\Delta$f | $\cdots$ | f0+7$\Delta$f |

DL

RX | MSu

RX | MSu+1

MSu+1 | TX

M=4 Datensymbole

Mod.

V

EP 1 521 389 A2

FIG 4   Stand der Technik

$e^{j2\pi f_0 kT/K}$

$a_0(nT)$ — $\uparrow K$ — $H(f)$ — $\otimes$ — $s(kT/K)$

$e^{j2\pi f_1 kT/K}$

$a_1(nT)$ — $\uparrow K$ — $H(f)$ — $\otimes$ — $+$ — $T/K$ — noisy channel

$e^{j2\pi f_{M-1} kT/K}$

$a_{M-1}(nT)$ — $\uparrow K$ — $T/K$ — $H(f)$ — $\otimes$

$e^{-j2\pi f_0 kT/K}$

$\otimes$ — $H^*(f)$ — $\downarrow K$ — $\widehat{a}_0(nT)$

$e^{-j2\pi f_1 kT/K}$

$\otimes$ — $H^*(f)$ — $\downarrow K$ — $\widehat{a}_1(nT)$

$e^{-j2\pi f_{M-1} kT/K}$

$\otimes$ — $H^*(f)$ — $\downarrow K$ — $\widehat{a}_{M-1}(nT)$